# EUROPÄISCHE PATENTSCHRIFT

(11) **EP 1 692 013 B1**
(45) Veröffentlichungstag und Bekanntmachung des Hinweises auf die Patenterteilung: **04.07.2007**
(21) Anmeldenummer: 04803678.4
(22) Anmeldetag: 09.12.2004
(51) Int. Cl.: B60R 13/08

(54) **TRITTFESTE, AKUSTISCH WIRKSAME BODENVERKLEIDUNG FÜR KRAFTFAHRZEUGE**
WEAR RESISTANT AND SOUND-INSULATING FLOOR COATING FOR A MOTOR VEHICLE
REVETEMENT DE SOL POUR VEHICULE AUTOMOBILE, RESISTANT A L'USURE, ISOLANT PHONIQUE EFFICACE

(30) Priorität: 12.12.2003 DE 20319429 U
(43) Veröffentlichungstag der Anmeldung: 23.08.2006
(73) Patentinhaber: Carcoustics TechConsult GmbH, 51381 Leverkusen (DE)
(72) Erfinder: KOSAR, Kay, 38448 Wolfsburg (DE)
(74) Vertreter: Meyer, Hans-Joachim
(86) Internationale Anmeldenummer: PCT/EP2004/014021
(87) Internationale Veröffentlichungsnummer: WO 2005/056341

(56) Entgegenhaltungen:
- EP-B- 1 079 991
- WO-A-98/04440
- WO-A-99/35007
- DE-A1- 19 627 106
- PATENT ABSTRACTS OF JAPAN Bd. 013, Nr. 335 (M-856), 27. Juli 1989 (1989-07-27) & JP 01 114554 A (KASAI KOGYO CO LTD), 8. Mai 1989 (1989-05-08)

## Beschreibung

Die Erfindung betrifft eine trittfeste, akustisch wirksame Bodenverkleidung für Kraftfahrzeuge, insbesondere Nutzfahrzeuge, mit einer Dekorschicht und einem unterhalb der Dekorschicht angeordneten trittfesten Blasformteil.

Der Boden des Fahrgastraumes von Fahrzeugen, insbesondere Nutzfahrzeugen, wird heute in der Regel mit Teppichboden verkleidet. Dabei wird bislang häufig ein Aufbau gewählt, bei dem der Teppichbodenbelag aus Gründen einer guten Trittfestigkeit auf einer selbstragenden Holzplatte liegt bzw. darauf verklebt ist. Üblicherweise wird zwischen der Holzplatte und dem Bodenblech des Fahrzeugs eine Schaumstofflage angeordnet, um Unebenheiten des Bodenblechs auszugleichen sowie um die Schall- und/oder Wärmeisolation zu verbessern. Solche Bodenaufbauten besitzen zwar eine ausreichende Trittfestigkeit, sie haben jedoch ein relativ hohes Gewicht und sind relativ teuer. Die Materialkombination aus Teppichboden, Holz und Schaumstoff lässt sich zudem nur schwierig entsorgen bzw. recyceln.

In der gattungsbildenden DE 196 27 106 A1 ist ein schallisolierendes Einlegeteil zur Unterfütterung des Teppichbodenbelages eines Kraftfahrzeuges beschrieben. In einer Ausführungsform besteht das Einlegeteil aus einem tritt- und standfesten Blasformteil, das als Stützkörper dient. Das Blasformteil weist eine geschlossene Unterseite und Oberseite auf. In der Oberseite ist eine Vielzahl von Vertiefungen ausgebildet. Die Vertiefungen sind bodenseitig luftdicht geschlossen und über ebenfalls in der Oberseite des Blasformteils ausgebildete Verbindungskanäle untereinander verbunden, um einen Austausch zwischen den einzelnen durch die Vertiefungen definierten Luftvolumina zu ermöglichen, so dass diese ein einziges großes Luftvolumen bilden. In der Oberseite des Blasformteils sind ferner Vertiefungen zur Aufnahme von Leitungen, insbesondere elektrischen Leitungen ausgebildet. Die Vertiefungen in der Oberseite des Blasformteils sind mit einer luftdurchlässigen Deckschicht versehen, auf der sich der Teppichbodenbelag befindet. Außerdem wird das Blasformteil auch zur Aufnahme von Warm-Frischluft-Lüftungsleitungen verwendet, die sich durch den Innen-Hohlraum des Blasformteils erstrecken. Wie sich der Zeichnung der DE 196 27 106 A1 entnehmen lässt, sind die Lüftungsleitungen getrennt von dem Blasformteil gefertigt worden.

Bei dieser bekannten Bodenverkleidung ist nachteilig, dass die Vertiefungen und deren Verbindungskanäle zur Oberseite des Blasformteils hin offen sind. Zwar werden die Vertiefungen und die Verbindungskanäle durch eine Deckschicht abgedeckt, gleichwohl ist damit zu rechnen, dass sich der Teppichbodenbelag im Bereich der Vertiefungen und der Verbindungskanäle nach unten einwölbt, so dass sich die Vertiefungen und Verbindungskanäle des Blasformteils im Teppichbodenbelag sichtbar abzeichnen und sich somit ein unbefriedigendes Aussehen des Teppichbodenbelages ergibt. Zudem wird der Luftaustausch zwischen den Vertiefungen und damit die akustische Wirksamkeit des Blasformteils durch ein Einsinken der Deckschicht bzw. des Teppichbodens in die Verbindungskanäle beeinträchtigt. Selbst wenn man das Blasformteil wendet, damit dessen geschlossene, plattenförmige Unterseite die Oberseite bildet, was in der DE 196 27 106 A1 allerdings weder gezeigt noch beschrieben ist, ist noch mit einer Verengung oder gar einem Verschluss der Verbindungskanäle zu rechnen. Denn die gemäß Anspruch 1 der DE 196 27 106 A1 vorgeschriebene luftdurchlässige Deckschicht, die an der offenen Seite der Vertiefungen vorgesehen ist, wird sich unter der Last des darüber befindlichen Aufbaus in die Verbindungskanäle einwölben. Die damit einhergehende Verengung der Verbindungskanäle führt zu einer Beeinträchtigung des gewünschten Luftaustausches zwischen den durch die Vertiefungen definierten einzelnen Luftvolumina und damit zu einer Beeinträchtigung der akustischen Wirksamkeit des Blasformteils.

Der vorliegenden Erfindung liegt die Aufgabe zugrunde, eine Bodenverkleidung der eingangs genannten Art zu schaffen, die ein einwandfreies Aussehen sowie eine verbesserte akustische Wirksamkeit bei optimaler Trittfestigkeit aufweist. Die Bodenverkleidung soll zudem kostengünstig herstellbar sein.

Diese Aufgabe wird erfindungsgemäß durch die in Anspruch 1 definierte Bodenverkleidung gelöst.

Die erfindungsgemäße Bodenverkleidung umfasst eine Dekorschicht und ein unterhalb der Dekorschicht angeordnetes trittfestes Blasformteil. Das Blasformteil weist oberseitig eine im Wesentlichen geschlossene Deckplatte und unterseitig ein Strukturteil auf. Die Deckplatte und das Strukturteil haben unterschiedliche Wandstärken, wobei im Strukturteil eine Vielzahl kästchen- oder becherartiger Hohlkammern ausgebildet ist, die einseitig offen, jedoch unterseitig geschlossen sind, und wobei das Strukturteil mit Schaumstoff unterschäumt ist. Zumindest mehrere der Hohlkammern gehören, bei Abschluss nach außen, einem gemeinsamen, zwischen der Deckplatte und dem Strukturteil eingeschlossenen Luftraum an.

Im Gegensatz zu dem in der DE 196 27 106 A1 gezeigten Blasformteil ist bei dem Blasformteil der erfindungsgemäßen Bodenverkleidung oberseitig eine glatte, im Wesentlichen unstrukturierte Deckplatte vorgesehen. Die im Strukturteil des Blasformteils ausgebildeten Hohlkammern bzw. Vertiefungen können sich in der Dekorschicht der Bodenverkleidung, bei der es sich vorzugsweise um eine Teppichschicht handelt, nicht abzeichnen. Das Aussehen der erfindungsgemäßen Bodenverkleidung ist daher einwandfrei. Ferner zeichnet sich die erfindungsgemäße Bodenverkleidung durch eine verbesserte Schallisolierung aus, und zwar insbesondere gegenüber dem aus der DE 196 27 106 A1 bekannten Einlegeteil. Denn bei der erfindungsgemäßen Bodenverkleidung sind die einem gemeinsamen Luftraum zugehörenden Hohlkammern nicht durch außenliegende Verbindungskanäle untereinander verbunden, die durch weiche, verformbare Deckschichten gegebenenfalls verengt oder gar verschlossen werden.

Die erfindungsgemäße Bodenverkleidung lässt sich kostengünstig herstellen, da die Dekor- bzw. Teppichschicht unmittelbar auf die Deckplatte aufgebracht werden kann. Auf eine zusätzliche Deckschicht, wie sie bei dem Einlegeteil gemäß der DE 196 27 106 A1 zwischen der Oberseite des Blasformteils und Dekor- bzw. Teppichschicht angeordnet ist, kann bei der erfindungsgemäßen Bodenverkleidung verzichtet werden, was die Herstellungskosten entsprechend verringert.

Die Herstellung des Blasformteils der erfindungsgemäßen Bodenverkleidung kann vorzugsweise entsprechend der Herstellung des in der EP 0 775 354 B1 beschriebenen Schall-Absorbers erfolgen. Der Inhalt der auf die Anmelderin zurückgehenden EP 0 775 354 B1 wird hiermit in diese Anmeldung vollständig einbezogen.

Eine vorteilhafte Ausgestaltung der erfindungsgemäßen Bodenverkleidung besteht darin, dass die im Strukturteil des Blasformteils ausgebildeten Hohlkammern unterschiedlich groß und/oder unterschiedlich tief sind. Auf diese Weise lässt sich leicht eine Anpassung des Blasformteils an die Kontur des Bodenblechs des Fahrzeuges erreichen. Darüber hinaus kann durch unterschiedlich große und/oder unterschiedlich tiefe Hohlkammern auch eine Anpassung in akustischer Hinsicht erfolgen, indem die Größe und/oder Tiefe der Hohlkammern in Abhängigkeit der auftretenden Schallfrequenzen bemessen werden. Bei den kleineren Hohlkammern ist hierbei bevorzugt, dass deren Unterseiten zugleich auch eine geringere Tiefe haben als die Unterseiten der größeren Hohlkammern.

Eine weitere vorteilhafte Ausgestaltung der erfindungsgemäßen Bodenverkleidung besteht darin, dass zwischen der Deckplatte und dem Strukturteil des Blasformteils im Bereich der Hohlkammern punkt- oder linienförmige Verschweißungen zwischen Kammerwänden der Hohlkammern und der Deckplatte ausgebildet sind. Durch die Verschweißungen kann sichergestellt werden, dass die angrenzenden Hohlkammern in aller Regel nach oben offen sind, d.h. dass die Deckplatte die betreffende Hohlkammer nie vollständig verschließt. Dabei ist es insbesondere möglich, dass eine Hohlkammer, die vorzugsweise einen rechteckigen bzw. quadratischen Grundriss aufweist, bis zu dreiseitig hin durch Verschweißungen geschlossen ist. Die Verschweißungen verbessern auch die Stabilität, insbesondere die Biegesteifigkeit des Blasformteils.

Als Ausgangsmaterial für das Blasformteil wird vorzugsweise Polypropylen, insbesondere faserverstärktes Polypropylen verwendet.

Zum Unter- bzw. Hinterschäumen des Strukturteils des Blasformteils kann insbesondere Polyurethan-Schaumstoff oder ein anderer Weichschaumstoff verwendet werden.

Nach einer bevorzugten Ausgestaltung der erfindungsgemäßen Bodenverkleidung sind in dem Blasformteil ein Kabelkanal, eine Luftführung und/oder eine Aufnahme zur Unterbringung eines oder mehrerer Funktionsteile integriert. Alternativ oder ergänzend kann auch in der unterhalb des Blasformteils angeordneten Lage aus porösem und/oder elastischem Material mindestens ein Kabelkanal integriert sein.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine perspektivische Ansicht eines Abschnitts einer Bodenverkleidung zur Anordnung auf einem Bodenblech eines Fahrzeugs gemäß einem ersten Ausführungsbeispiel;
- Fig. 2: eine Querschnittsansicht einer Bodenverkleidung gemäß einem weiteren Ausführungsbeispiel;
- Fig. 3: eine prinzipielle Darstellung eines Blasformteils einer erfindungsgemäßen Bodenverkleidung mit angedeuteten Verschweißungslinien;
- Fig. 4: einen Querschnitt durch einen Schlauchabschnitt als Ausgangselement eines Blasformteils einer erfindungsgemäßen Bodenverkleidung;
- Fig. 5: einen Schlauchabschnitt gemäß Fig. 4, eingelegt in ein Blasformwerkzeug, vor Zusammenfahren der beiden Werkzeughälften in einer Teil-Querschnittsdarstellung;
- Fig. 6: eine Darstellung gemäß Fig. 5 mit eingelegtem Schlauchelement, nach Zusammenfahren der Werkzeughälften;
- Fig. 7: eine Darstellung gemäß Fig. 5 bzw. Fig. 6, nach erfolgtem Blasvorgang vor dem Entformen des Blasformteils; und
- Fig. 8: eine perspektivische Darstellung einer Bodenverkleidung in Unteransicht gemäß einem weiteren Ausführungsbeispiel, wobei das Strukturteil des Blasformteils der Übersichtlichkeit halber ohne die damit verbundene Unterschicht freiliegend dargestellt ist.

Die in verschiedenen Ausführungsbeispielen gezeigte Bodenverkleidung 1, 1', 1" ist insbesondere für den Einbau in Nutzfahrzeuge bestimmt und umfasst eine Dekoroder Teppichschicht 2, ein trittfestes, selbsttragendes Blasformteil 3, das auch als Schallabsorber angesprochen werden kann, und eine als Unterbau zum Fahrzeugboden dienende Lage 4 aus PUR-Schaumstoff oder einem anderen Weichschaumstoff.

Das Blasformteil 3 weist oberseitig eine glatte, geschlossene Deckplatte 5 und unterseitig ein Strukturteil 6 auf. Die Deckplatte 5 kann auch als Trägerteil angesprochen werden. Im Strukturteil 6 sind einseitig offene, nämlich zur Deckplatte 5 hin offene Hohlkammern 7 ausgebildet, welche Kammerwände 8, 9 aufweisen. Die Hohlkammern 7 sind im Wesentlichen kästchen- oder becherartig ausgebildet. Jede Hohlkammer 7 besitzt einen unteren, im Wesentlichen ebenflächige Boden 10 und ebenflächige, im Wesentlichen senkrecht dazu ausgerichtete Kammerwände 8, 9.

Die Deckplatte 5 ist mit dem Strukturteil 6 verbunden, und zwar in zwei Randbereichen 11, 12 durch integralen Übergang und an den quer dazu verlaufenden Stirnkanten durch Verschweißung. Die trittfeste, selbsttragende Eigenschaft des Blasformteils 3 ergibt sich im Wesentlichen durch ein Zusammenspiel von Strukturteil 6 und Deckplatte 5. Eine größere Wandstärke der Deckplatte 5 ist hierzu nicht unbedingt notwendig, wenn auch bevorzugt vorgesehen. Der Teppichboden 2 ist mit dem Teppichrücken unmittelbar mit der Deckplatte 5 des Blasformteils 3 verklebt.

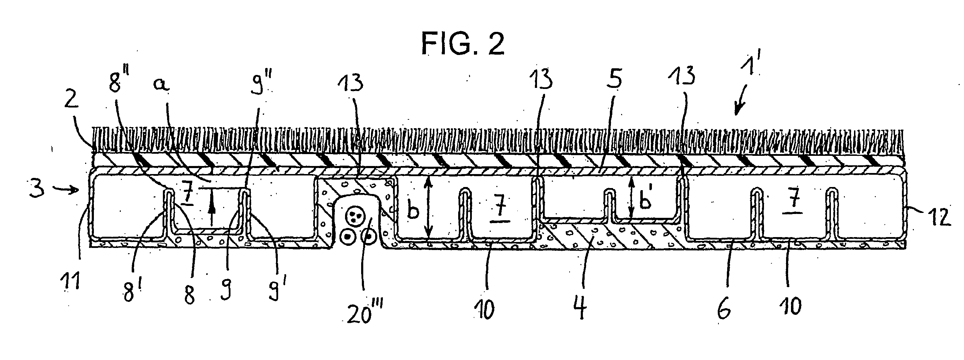

Wie insbesondere aus Fig. 2 ersichtlich, sind in dem Bereich der Hohlkammern 7 mehrere Verschweißungen 13 zwischen dem Strukturteil 6 und der Deckplatte 5 ausgebildet. Die Verschweißungen 13 sind beim Ausführungsbeispiel linienartig angeordnet. Im einzelnen sind die Kammerwände 8 bzw. 9 entlang ihren der Deckplatte 5 zugewandten Stirnseiten bzw. Spitzen bzw. Übergängen 8 " , 9" zwischen zwei Kammerwänden 8, 8' und der Deckplatte 5 verschweißt. Es können auch punktartige Verschweißungen vorgesehen sein. In den Bereichen, in welchen keine Verschweißungen ausgebildet sind, und dies ist in der Regel bezüglich jedenfalls einer Kammerwand 8 einer Hohlkammer 7 der Fall, sind die Spitzen bzw. Übergänge zwischen den Kammerwänden 8, 8' - im Wesentlichen bei allen vergleichbaren Kammerwänden 8 gleichförmig über das gesamten Blasformteil, in einem Abstand a von der Deckplatte 5 beabstandet. Der Abstand a kann, um schalltechnisch wirksam zu sein, etwa 1 bis 4 mm betragen. Bevorzugt ist in diesem Zusammenhang ein Abstand a von etwa 2 mm. Dabei ist der Abstand a nicht wesentlich an die Tiefe der Hohlkammern 7 gebunden, sondern vielmehr durch die noch wirksame Luftreibung in diesem Abstand a beeinflusst. Gleichwohl ist jedoch in Bezug auf die Tiefe b einer Hohlkammer 7 ein Abstand a im Bereich von 3 bis 7 %, insbesondere etwa 5 % der Gesamttiefe bevorzugt.

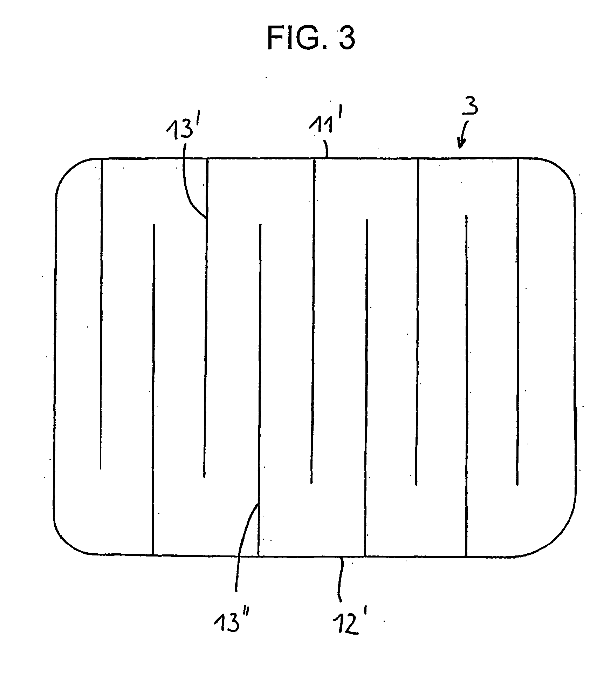

Weiterhin können die Verschweißungen 13' 13'', wie in Fig. 3 angedeutet ist, von den jeweiligen Rändern ausgehend, kammerartig, ineinander verzahnt, jedoch nicht miteinander verbunden (im Hinblick auf von gegenüberliegenden Rändern ausgehende Verschweißungen) verlaufen. Die Randbereiche 11', 12', von welchen die Verschweißungen 13', 13'' hierbei ausgehen, können bevorzugt solche sein, die ohnehin verschweißt sind.

Erfindungsgemäß werden somit Hohlkammern 7 ausgebildet, deren Kammerwände 8, 9 bei im Wesentlichen gleicher Tiefenerstreckung teilweise mit der Deckplatte 5 verschweißt sind und teilweise freikragend auf die Deckplatte 5 zu gerichtet sind, unter Belassung eines Luftspaltes a zwischen einer Stirnfläche 8", 9" der Kammerwand 8, 8', 9, 9' und der Deckplatte 5. Zumindest mehrere der Hohlkammern 7, vorzugsweise alle, sind Teil eines gemeinsamen, zwischen der Deckplatte 5 und dem Strukturteil 6 des Blasformteils 3 eingeschlossenen Luftraums.

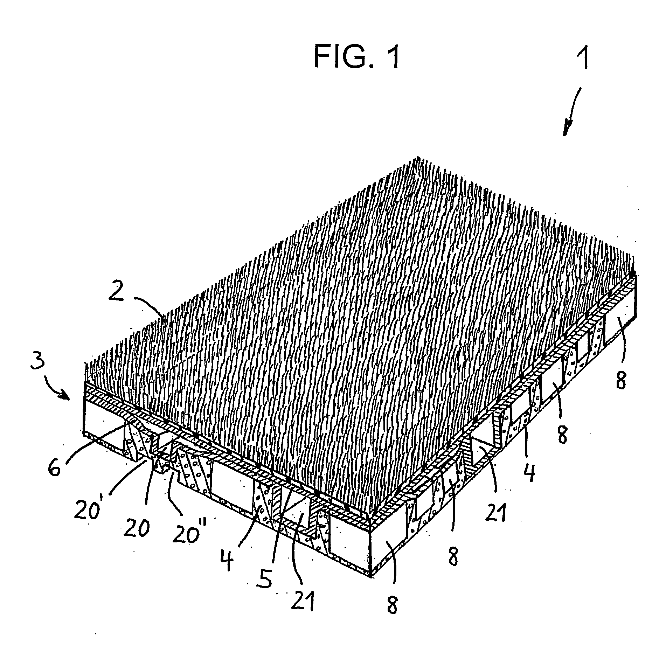

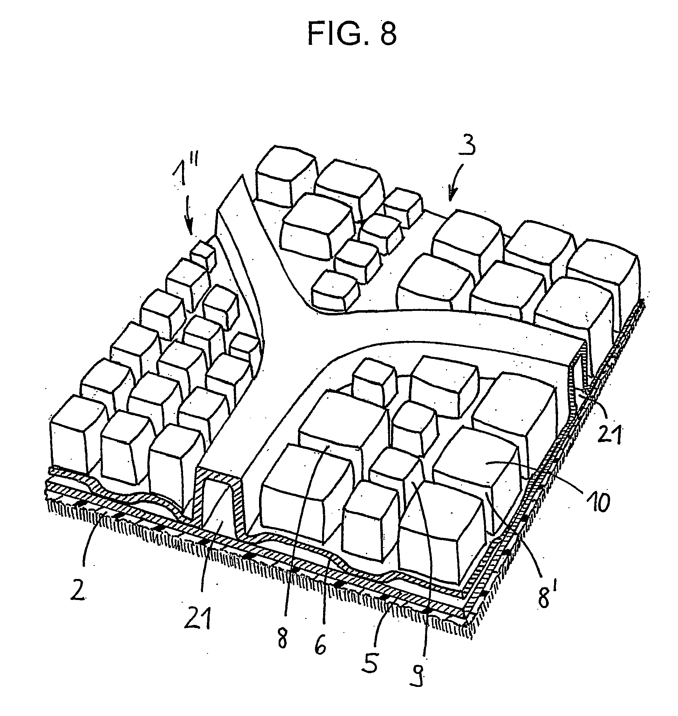

Wie aus den Figuren 1 und 8 ersichtlich ist, können die Hohlkammern 7 unterschiedliche Größen aufweisen. Dies kann einerseits dadurch erreicht sein, dass die Grundfläche der Hohlkammern 7 unterschiedlich groß ist, aber auch kombiniert oder alternativ dadurch, dass die Unterseiten bzw. Böden 10 der Hohlkammern 7 unterschiedlich weit zur Deckplatte 5 beabstandet sind (vgl. insbesondere Fig. 2).

Bei dem verwendeten Material handelt es sich um ein thermoplastisches, verschweißbares Material. Es bietet sich beispielsweise Polypropylen, insbesondere mit Glasfaser versetztes Polypropylen, an.

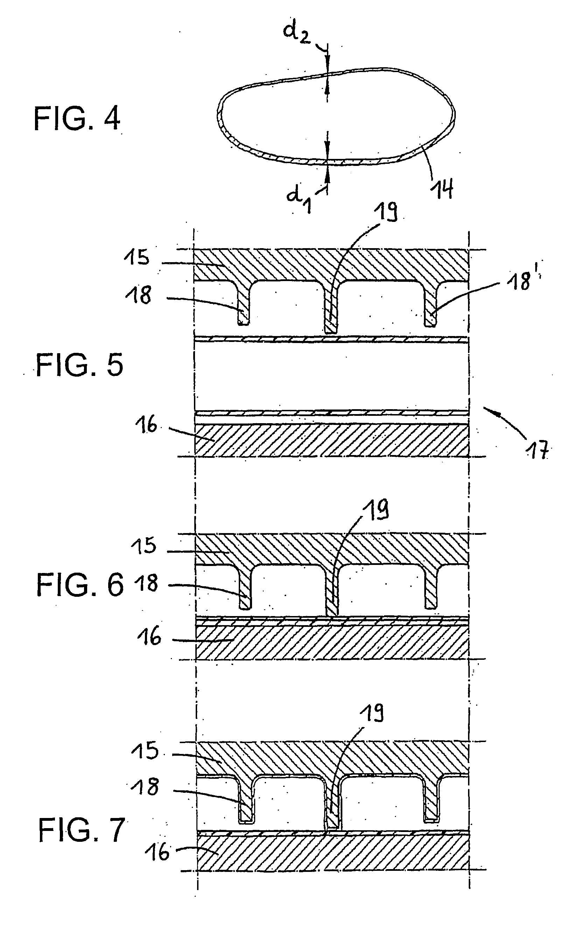

Wie in Fig. 4 skizziert, kann eine derartige Blasformkapsel 3 aus einem extrudierten Schlauchabschnitt 14 hergestellt werden. Der Schlauchabschnitt 14 weist unterschiedliche Wandstärken d1 bzw. d2 über seinen Umfang auf.

Wie in den Figuren 5 bis 7 dargestellt, wird solch ein Schlauchabschnitt 14 zur Herstellung eines Blasformteils 3 gemäß den Figuren 1, 2 oder 8 zwischen zwei Hälften 15, 16 eines Blasformwerkzeuges 17 eingeführt. Hierbei sind in der Werkzeughälfte 15 mehrere Wandelemente 18, 18', 19 ausgebildet, welche den Zwischenräumen zwischen zwei Kammerwänden 8, 8' entsprechen. Es ist zu erkennen, dass das Wandelement 19 eine größere Höhe aufweist als die beiden anderen dargestellten Wandelemente 18 und 18'.

Wie sich weiter aus einem Vergleich der Figuren 6 und 7 ergibt, kann nach einem Zufahren des Blasformwerkzeuges 17 durch Einblasen von Luft zwischen die dickere und die dünnere Lage des Schlauchabschnittes 14 ein Anliegen der betreffenden Bereiche an den Werkzeughälften 15, 16 erreicht werden. Im Bereich des bei geschlossenem Werkzeug nahe an der unteren Werkzeughälfte 16 befindlichen Wandelements 19 ergibt sich eine Verschweißung zwischen der den Strukturteil 6 bildenden Lage und der die Deckplatte 5 bildenden Lage des Schlauchabschnittes 14.

Wie in den Figuren 1 und 8 gezeigt, kann in dem Blasformteil 3 mindestens ein Kabelkanal 20 und/oder eine Luftführung 21 integriert sein. Der Kabelkanal 20 bzw. die Luftführung 21 sind dabei in dem Strukturteil 6, d.h. mit dem Blasformteil 3 einstückig ausgebildet. Es liegt ferner im Rahmen der Erfindung, eine oder mehrere Aufnahmen (nicht gezeigt) zur Unterbringung von Funktionsteilen, beispielsweise von elektronischen Bauteilen, in dem Blasformteil 3 zu integrieren.

Bei den in den Figuren 1 und 2 gezeigten Ausführungsbeispielen sind in der unterhalb des Blasformteils 3 angeordneten Schaumstofflage ein bzw. zwei Kanäle ausgebildet, die der Aufnahme von elektrischen Leitungen und/oder Flüssigkeitsleitungen dienen.

Bei dem Ausführungsbeispiel in Fig. 8 ist die Schaumstofflage 4 der Übersichtlichkeit halber nicht gezeigt. Es ist hier insbesondere zu erkennen, dass die Hohlkammern derart versetzt zueinander angeordnet sind, dass sich im Wesentlichen keine durchgehende Knicklinie, insbesondere entlang Hauptachsen des Blasformteils, 3 ergibt. In einer horizontalen Erstreckungsrichtung zweier gegenüberliegender Kammerwände 8, 8' ist in der Regel eine quer dazu verlaufende Kammerwand 9 einer weiteren Hohlkammer angeordnet. Hierdurch wird eine hohe integrale Stabilität des Blasformteils 3 erreicht. Zugleich ergibt sich durch die beschriebene Beabstandung einzelner Kammerwände von der Deckplatte 5 und die versetzte Anordnung zueinander auch noch ein schalltechnischer Effekt. Insgesamt kann der beschriebene Abstand a im Zusammenhang mit den Größen der Hohlkammern und der Feineinstellung des Abstandes a zu einer frequenzbezogenen Einstellung des als Schall-Absorber fungierenden Blasformteils 3 genutzt sein.

Die versetzte Anordnung der Hohlkammern 7 zueinander und auch die unterschiedliche Größe der einzelnen Hohlkammern 7 führt zu einer sehr hohen Stabilität des Blasformteils 3 insgesamt. Nicht zuletzt diese Ausbildung ermöglicht auch die teilweise freikragende Ausbildung von einzelnen Wänden der Hohlkammer 7 gegenüber der Deckplatte 5. Trotz des geringen, beschriebenen Abstandes a kann es nicht zu solchen Verformungen des Blasformteils 3 kommen, dass etwa ein Zusetzen der Abstände a sich ergibt.

## Patentansprüche

1. Trittfeste, akustisch wirksame Bodenverkleidung für ein Kraftfahrzeug, insbesondere Nutzfahrzeug, mit einer Dekorschicht (2) und einem unterhalb der Dekorschicht angeordneten trittfesten Blasformteil (3),
**dadurch gekennzeichnet, dass**
das Blasformteil (3) oberseitig eine im Wesentlichen geschlossene Deckplatte (5) und unterseitig ein Strukturteil (6) aufweist, wobei die Deckplatte (5) und
das Strukturteil (6) unterschiedliche Wandstärken (d1, d2) aufweisen und im Strukturteil (6) eine Vielzahl kästchen- oder becherartiger Hohlkammern (7) ausgebildet ist, die einseitig offen, jedoch unterseitig geschlossen sind, wobei zumindest mehrere der Hohlkammern (7), bei Abschluss nach außen, einem gemeinsamen, zwischen der Deckplatte (5) und dem Strukturteil (6) eingeschlossenen Luftraum zugehören, und wobei das Strukturteil (6) mit Schaumstoff (4) unterschäumt ist.

2. Bodenverkleidung nach Anspruch 1,
**dadurch gekennzeichnet, dass**
die Hohlkammern (7) unterschiedlich groß und/oder unterschiedlich tief sind.

3. Bodenverkleidung nach Anspruch 1 oder 2,
**dadurch gekennzeichnet, dass**
die Dekorschicht (2) unmittelbar mit der Deckplatte (5) des Blasformteils (3) verklebt ist.

4. Bodenverkleidung nach einem der Ansprüche 1 bis 3,
**dadurch gekennzeichnet, dass**
die Dekorschicht (2) ein Teppichboden ist.

5. Bodenverkleidung nach einem der Ansprüche 1 bis 4,
**dadurch gekennzeichnet, dass**
eine unterhalb des Blasformteils (3) angeordnete Lage (4) aus Schaumstoff und Vliesmaterial gebildet ist.

6. Bodenverkleidung nach einem der Ansprüche 1 bis 5,
**dadurch gekennzeichnet, dass**
die unterhalb des Blasformteils (3) angeordnete Lage (4) aus Weichschaumstoff, vorzugsweise aus Polyurethan-Schaumstoff gebildet ist.

7. Bodenverkleidung nach einem der Ansprüche 1 bis 6,
**dadurch gekennzeichnet, dass**
in dem Blasformteil (3) mindestens ein Kabelkanal (20), mindestens eine Luftführung (21) und/oder mindestens eine Aufnahme zur Unterbringung eines oder mehrerer Funktionsteile integriert sind.

8. Bodenverkleidung nach einem der Ansprüche 1 bis 7,
**dadurch gekennzeichnet, dass**
in der unterhalb des Blasformteils (3) angeordneten Lage (4) aus porösem und/oder elastischem Material mindestens ein Kabelkanal (20', 20", 20''') integriert ist.

9. Bodenverkleidung nach einem der Ansprüche 1 bis 8,
**dadurch gekennzeichnet, dass**
das Blasformteil (3) aus Polypropylen, vorzugsweise aus faserverstärktem Polypropylen hergestellt ist.

10. Bodenverkleidung nach einem der Ansprüche 1 bis 9,
**dadurch gekennzeichnet, dass**
zwischen der Deckplatte (5) und dem Strukturteil (6) des Blasformteils (3) im Bereich der Hohlkammern (7) punkt- oder linienförmige Verschweißungen (13, 13', 13'') zwischen Kammerwänden (8, 9, 8', 9') der Hohlkammern (7) und der Deckplatte (5) ausgebildet sind.

11. Bodenverkleidung nach Anspruch 10,
**dadurch gekennzeichnet, dass**
Hohlkammern (7) ausgebildet sind, deren Kammerwände bei im Wesentlichen gleicher Tiefenerstreckung teilweise mit der Deckplatte (5) verschweißt sind und teilweise freikragend auf die Deckplatte (5) zu gerichtet sind, unter Belassung eines Luftspaltes (a) zwischen einer Stirnfläche der Kammerwand (8, 8', 9, 9') und der Deckplatte (5).

12. Bodenverkleidung nach einem der Ansprüche 1 bis 11,
**dadurch gekennzeichnet, dass**
das Strukturteil (6) und die Deckplatte (5) randseitig einstückig ineinander übergehen.

## Claims

1. A crush-resistant, acoustically effective floor covering for a motor vehicle, in particular a commercial vehicle, comprising a decorative layer (2) and a crush-resistant blow moulded part (3) arranged underneath the decorative layer,
**characterised in that**
on the top, the blow moulded part (3) comprises an essentially closed cover plate (5) while on the bottom it comprises a structural component (6), wherein the wall thickness (d1) of the cover plate (5) is different from that (d2) of the structural component (6) and wherein the structural component (6) comprises a plurality of box-shaped or cup-shaped hollow chambers (7) which are open on one side but closed on the underside, wherein at least some of the hollow chambers (7) which are closed off to the outside form part of a common air space enclosed between the cover plate (5) and the structural component (6), and wherein the structural component (6) is underfoamed by foam material (4).

2. The floor covering according to claim 1,
**characterised in that** the hollow chambers (7) differ in size and/or differ in depth.

3. The floor covering according to claim 1 or 2,
**characterised in that** the decorative layer (2) is directly glued to the cover plate (5) of the blow moulded part (3).

4. The floor covering according to any one of claims 1 to 3,
**characterised in that** the decorative layer (2) is a carpet floor covering.

5. The floor covering according to any one of claims 1 to 4,
**characterised in that** a layer (4), arranged underneath the blow moulded part (3), is made from foam material and non-woven material.

6. The floor covering according to any one of claims 1 to 5,
**characterised in that** the layer (4), which is arranged underneath the blow moulded part (3), is made from a soft foam material, preferably a polyurethane foam material.

7. The floor covering according to any one of claims 1 to 6,
**characterised in that** at least one cable channel (20), at least one air conduit (21) and/or at least one receptacle for accommodating one or several functional components are integrated in the blow moulded part (3).

8. The floor covering according to any one of claims 1 to 7,
**characterised in that** at least one cable channel (20', 20", 20"') is integrated in the layer (4) made of porous and/or elastic material, which layer (4) is arranged underneath the blow moulded part (3).

9. The floor covering according to any one of claims 1 to 8,
**characterised in that** the blow moulded part (3) is made from polypropylene, preferably from fibre-reinforced polypropylene.

10. The floor covering according to any one of claims 1 to 9,
**characterised in that** between the cover plate (5) and the structural component (6) of the blow moulded part (3) in the region of the hollow chambers (7) there are spot-shaped or line-shaped welds (13, 13', 13") between chamber walls (8, 9, 8', 9') of the hollow chambers (7) and the cover plate (5).

11. The floor covering according to claim 10,
**characterised in that** hollow chambers (7) are formed whose chamber walls while of essentially identical depths are partly welded to the cover plate (5) and partly face the cover plate (5) forming a free collar and leaving an air gap (a) between a front face of the chamber wall (8, 8', 9, 9') and the cover plate (5).

12. The floor covering according to any one of claims 1 to 11,
**characterised in that** on the edge side there is a one-piece transition between the structural component (6) and the cover plate (5).

## Revendications

1. Habillage de plancher résistant à l'usure, acoustiquement efficace, pour véhicules automobiles, en particulier pour véhicules utilitaires, qui présente une couche décorative (2) et une pièce (3) moulée-soufflée résistante à l'usure et disposée en dessous de la couche décorative, **caractérisé en ce que** sur son côté supérieur, la pièce (3) moulée-soufflée présente une plaque de recouvrement (5) essentiellement fermée et sur son côté inférieur une pièce structurelle (6), la plaque de recouvrement (5) et la pièce structurelle (6) présentant différentes épaisseurs (dl, d2) et plusieurs chambres creuses (7) en forme de caisson ou de godet étant formées dans la pièce structurelle (6), étant ouvertes d'un côté mais fermées sur le côté inférieur, tandis qu'au moins plusieurs des chambres creuses (7) qui se raccordent du côté supérieur appartiennent à un espace d'air commun enfermé entre la plaque de recouvrement (5) et la pièce structurelle (6), une mousse (4) étant moussée en dessous de la pièce structurelle (6).

2. Habillage de plancher selon la revendication 1, **caractérisé en ce que** les chambres creuses (7) sont de tailles différentes et/ou des profondeurs différentes.

3. Habillage de plancher selon les revendications 1 ou 2, **caractérisé en ce que** la couche décorative (2) est collée directement sur la plaque de recouvrement (5) de la pièce moulée-soufflée (3).

4. Habillage de plancher selon l'une des revendications 1 à 3, **caractérisé en ce que** la couche décorative (2) est un tapis de plancher.

5. Habillage de plancher selon l'une des revendications 1 à 4, **caractérisé en ce qu'**une couche (4) en mousse et matériau feutré est formée en dessous de la pièce moulée-soufflée (3).

6. Habillage de plancher selon l'une des revendications 1 à 5, **caractérisé en ce que** la couche (4) disposée en dessous de la pièce moulée-soufflée (3) est formée d'une mousse déformable et de préférence d'une mousse de polyuréthane.

7. Habillage de plancher selon l'une des revendications 1 à 6, **caractérisé en ce qu'**au moins un canal (20) pour câbles, au moins un passage d'air (21) et/ou au moins un logement qui permet d'installer une ou plusieurs pièces fonctionnelles sont intégrés dans la pièce moulée-soufflée (3).

8. Habillage de plancher selon l'une des revendications 1 à 7, **caractérisé en ce qu'**au moins un canal (20', 20'', 20''') pour câbles est intégré dans la couche (4) en matériau poreux et/ou élastique disposée en dessous de la pièce moulée-soufflée (3).

9. Habillage de plancher selon l'une des revendications 1 à 8, **caractérisé en ce que** la pièce moulée-soufflée (3) est réalisée en polypropylène et de préférence en polypropylène renforcé de fibres.

10. Habillage de plancher selon l'une des revendications 1 à 9, **caractérisé en ce que** dans la zone des chambres creuses (7), des soudages (13, 23', 13'') ponctuels ou linéaires sont formés entre les parois (8, 9, 8', 9') des chambres creuses (7) et la plaque de recouvrement (5), entre la plaque de recouvrement (5) et la pièce structurelle (6) de la pièce moulée-soufflée (3).

11. Habillage de plancher selon la revendication 10, **caractérisé en ce que** l'on y forme des chambres creuses (7) dont les parois sont partiellement soudées à la plaque de recouvrement (5) lorsqu'elles s'étendent essentiellement à la même profondeur et sont partiellement orientées en débordement libre vers la plaque de recouvrement (5) en laissant un interstice d'air (a) entre la surface frontale de la paroi (8, 8', 9, 9') de chambre et la plaque de recouvrement (5).

12. Habillage de plancher selon l'une des revendications 1 à 11, **caractérisé en ce que** la pièce structurelle (6) et la plaque de recouvrement (5) se fondent d'un seul tenant l'une dans l'autre sur leurs bords.
